# EUROPÄISCHE PATENTSCHRIFT

(11) **EP 3 907 161 B1**
(45) Veröffentlichungstag und Bekanntmachung des Hinweises auf die Patenterteilung: **29.10.2025**
(21) Anmeldenummer: 21171577.6
(22) Anmeldetag: 06.03.2020
(51) Int. Cl.: B65G 47/86, B67C 7/00, B65G 47/90, B65B 43/46, B65B 43/54

(54) **PASSIVE KLAMMERVORRICHTUNG**
PASSIVE CLAMP DEVICE
DISPOSITIF DE COLLIER DE SERRAGE PASSIF

(30) Priorität: 06.03.2019 DE 102019105652
(43) Veröffentlichungstag der Anmeldung: 10.11.2021
(62) Teilanmeldung aus: 20161530.9
(73) Patentinhaber: KRONES AG, 93073 Neutraubling (DE)
(72) Erfinder: Landler, Bruno, 93073 Neutraubling (DE); Gloetzl, Reiner, 93073 Neutraubling (DE)
(74) Vertreter: Nordmeyer, Philipp Werner

(56) Entgegenhaltungen:
- EP-A1- 1 277 693
- EP-A1- 2 716 593
- DE-A1- 102014 117 358
- DE-B3- 102014 116 004
- US-B1- 8 672 376

## Beschreibung

### Technisches Gebiet

Die vorliegende Erfindung betrifft eine passive Klammervorrichtung zum Halten eines Behälters in einer Behälterbehandlungsvorrichtung, beispielsweise zum Halten eines Getränkebehälters an einem Halsabschnitt.

### Stand der Technik

Es ist bekannt, in Getränkeabfüllanlagen die jeweils zu befüllenden Behälter beziehungsweise bereits befüllte Behälter mittels Klammervorrichtungen durch die einzelnen Behandlungsstationen der Behälterbehandlungsvorrichtung zu transportieren. Dabei sind unterschiedliche Klammervorrichtungen bekannt, welche die jeweiligen zu behandelnden Behälter auf unterschiedliche Art und Weise halten.

So sind beispielsweise aktive Klammervorrichtungen, bei welchen ein Öffnen und Schließen der jeweiligen Halteabschnitte der Klammervorrichtung mittels eines Aktuators aktiv durchgeführt wird, bekannt. Solche aktiven Klammervorrichtungen dienen insbesondere dazu, eine sichere und schonende Übernahme der jeweiligen Behälter von einer vorhergehenden Klammervorrichtung zu ermöglichen oder eine ebenso sichere und behälterschonende Übergabe der Behälter an eine nachfolgende Klammervorrichtung zu gewährleisten. Solche aktiven Klammervorrichtungen setzen sich aus einer Vielzahl von Einzelteilen, beispielsweise Klammerarmen, Buchsen, Aktuatoren, Vorspannelementen und entsprechenden Verbindungselementen zum sicheren Verbinden der vorgenannten Teile, zusammen. Derart aufgebaute Klammervorrichtungen sind mithin aufwendig zu reinigen und weisen einen entsprechend hohen Fertigungsaufwand auf. Zudem sind zum aktiven Öffnen und Schließen der aktiven Klammervorrichtung entsprechende das Öffnen und Schließen steuernde Teile an einer aktive Klammervorrichtungen aufweisenden Behandlungsvorrichtung vorzusehen.

Fernerhin bekannt sind passive Klammerverrichtungen, welche lediglich durch das Einschieben des jeweiligen Behälters in die Klammervorrichtung mit dem Behälter versehen werden und dann den Behälter halten. Die Klammerarme weisen dabei eine feste Position auf. Zum Greifen eines Behälters muss dieser in die Klammer gedrückt werden. Dabei werden die Klammerarme durch den Behälter nach außen gespreizt, so dass der Behälter gegen die aufgrund des Spreizens der Klammerarme entstehende Schließkraft der Klammerarme bewegt werden muss. Die Klammerarme sind derart ausgebildet, dass ein eingeschobener Behälter durch die Klammerarme in einer im Wesentlichen festen Position gehalten wird. Zum Entnehmen des Behälters aus der Klammervorrichtung ist dieser wieder aus der Klammer herauszuziehen.

Bei einem kontinuierlichen Einschieben des Behälters die Klammer erfolgt somit zuerst ein Aufspreizen der Klammerarme, da diese durch den Behälter verdrängt werden. Um dieses Aufspreizen zu ermöglichen, ist es bekannt, die Klammerarme elastisch auszubilden. Eine derartige Klammervorrichtung ist beispielsweise aus der DE 195 13 221 A1 oder der DE 10 2005 002 715 A1 bekannt. Bei derartigen Klammervorrichtungen sind durch die die Federwirkung bereitzustellen Klammerarme ebenfalls das Gewicht des Behälters aufzunehmen.

Ferner sind passive Klammervorrichtungen bekannt, bei welchen ein Vorspannelement die Klammerarme in einer vorgegebenen Position, in der Regel der geschlossenen Position, vorspannt. Derartige Vorspannelemente sind beispielsweise durch spiralförmig geformte Druckfedern oder durch in der Klammervorrichtung vorgesehenen Magneten ausgebildet. Eine Klammervorrichtung mit letztgenannter Ausbildung ist beispielsweise der DE 10 2017 116 921 A1 zu entnehmen.

Die DE 10 2014 116 004 B3, welche die Merkmale des Oberbegriffs des Anspruchs 1 offenbart, beschreibt eine Behälterklammer zum Halten und Führen von Behältern. Die EP 1 277 693 A1 beschreibt eine Transporteinheit für Behälter in Abfüllmaschinen. Die DE 10 2014 117 358 A1 beschreibt eine Flaschenklammer mit Kraftverstärkung. Die US 8,672,376 B1 beschreibt eine Greifvorrichtung zum Halten von Behältern. Die EP 2 716 593 A1 beschreibt einen Klammergreifer für Behälter.

### Darstellung der Erfindung

Ausgehend von dem bekannten Stand der Technik ist es eine Aufgabe der vorliegenden Erfindung, eine verbesserte Klammervorrichtung zum Halten eines Behälters in einer

Behälterbehandlungsvorrichtung, bevorzugt zum Halten eines Getränkebehälters an einem Halsabschnitt, bereitzustellen.

Die Aufgabe wird durch eine passive Klammervorrichtung zum Halten eines Behälters in einer Behälterbehandlungsvorrichtung, bevorzugt zum Halten eines Getränkebehälters an einem Halsabschnitt mit den Merkmalen des Anspruchs 1 gelöst. Vorteilhafte Weiterbildungen ergeben sich aus den Unteransprüchen, der Beschreibung und den Figuren.

Entsprechend wird eine passive Klammervorrichtung zum Halten eines Behälters in einer Behälterbehandlungsvorrichtung, bevorzugt zum Halten eines Getränkebehälters an einem Halsabschnitt, vorgeschlagen, umfassend einen um eine erste Schwenkachse an einem Klammerträger schwenkbar angeordneten ersten Klammerarm mit einem Halteabschnitt zur Anlage an den zu haltenden Behälter, einen um eine zweite Schwenkachse am Klammerträger schwenkbar angeordneten zweiten Klammerarm mit einem Halteabschnitt zur Anlage an den zu haltenden Behälter, und ein elastischer Federbügel zum Vorspannen der Klammerarme in eine geschlossene Position, wobei die Klammerarme dazu eingerichtet und ausgebildet sind, zum Aufnehmen eines Behälters passiv durch ein Einschieben des Behälters geöffnet zu werden. Die passive Klammervorrichtung kennzeichnet sich ferner dadurch, dass sich der elastische Federbügel in einer senkrecht zu den Schwenkachsen liegenden Ebene erstreckt und die Klammerarme und der elastische Federbügel einstückig ausgebildet sind.

Dadurch, dass sich der elastische Federbügel in einer senkrecht zu den Schwenkachsen liegenden Ebene erstreckt, kann die Klammervorrichtung im Vergleich zu herkömmlichen Klammervorrichtungen verbesserte Hygieneeigenschaften aufweisen. Im Gegensatz zu herkömmlichen Vorspannelementen, wie beispielsweise eine spiralförmige Druckfeder, weist der elastische Federbügel keinerlei Spalte auf, in welchen sich Partikel absetzen können und so die Klammervorrichtung verunreinigen. Ferner sind keine Magnete notwendig, sodass sich entsprechend auch kein metallischer Abrieb an den Magneten ablagern kann, welcher nicht durch normales Abschwallen entfernbar ist. Weiterhin kann dadurch ein Zusammenbau der Klammervorrichtung im Vergleich zu herkömmlichen Klammervorrichtungen vereinfacht sein.

Dadurch, dass die Klammerarme und das Vorspannelement einstückig ausgebildet sind, kann eine besonders hygienische Konstruktion erzielt werden, da beispielsweise keine Spalte durch ansonsten vorzusehende Lagerbuchsen oder zur Anbindung zwischen dem Vorspannelement und den Klammerarmen entstehen.

Gemäß einer bevorzugten Ausführungsform ist der Federbügel bezüglich der Schwenkachsen auf einer den Halteabschnitten entgegengesetzten Seite der der Klammerarme angeordnet. Durch diese Anordnung muss der Federbügel nicht, wie bei herkömmlichen passiven Klammervorrichtungen oftmals der Fall, zusätzlich zur Bereitstellung der Federwirkung die Gewichtskraft der Flasche tragen, welche im Bereich der Haltearme durch die Klammerarme aufgenommen und im Bereich der Schwenkachsen an den Klammerträger übertragen wird. Mit anderen Worten kann dadurch eine Entkopplung zwischen dem Bereitzustellen der Federwirkung und dem Aufnehmen der Gewichtskraft des durch die Klammervorrichtung gehaltenen Behälters erzielt werden. Dies mag die Standzeit der Klammervorrichtung Vergleich zu herkömmlichen Klammervorrichtungen, bei welchen die Klammerarme sowohl die Federwirkung bereitzustellen als auch die Gewichtskraft aufnehmen, erhöhen. Zudem ermöglicht dies eine größere Varianz hinsichtlich der Form der Klammerarme und/oder der Mündung der Klammervorrichtung, durch welche ein aufzunehmender Behälter eingeschoben wird, da das Vorspannelement nun auf der gegenüberliegenden Seite bezogen auf die Schwenkachsen, mithin den Lager-und Drehpunkten der Klammerarme, vorgesehen ist.

Gemäß der Erfindung weist der Federbügel an seinen Enden Anbindungsbereiche zum Anbinden an jeweils einen Klammerarm auf, wobei die Anbindungsbereiche bezogen auf die Schwenkachsen an der Seite der Halteabschnitte an den Klammerarmen angreifen und sich auf die den Halteabschnitten entgegengesetzte Seite erstrecken. Dies ermöglicht, dass das Vorspannelement eine besonders einfache Form aufweisen kann und zudem sowohl eine genügend große Vorspannung als auch eine erforderliche Elastizität bereitstellt. Ferner kann dadurch der Federbügel sehr nahe an den Schwenkachsen angeordnet sein, sodass ein Bauraum auf der den Halteabschnitten abgewandten Seite entsprechend klein ausgeführt sein kann.

Bevorzugt erstrecken sich die Anbindungsbereiche bezogen auf eine Klammermittelachse außerhalb der Schwenkachsen. Dadurch mag ein Bauraum zwischen den Anbindungsbereichen bereitgestellt sein, in dem sich der Federbügel in einfacher Form erstrecken kann, ohne dass er sich signifikant nach hinten, mithin auf der den Halteabschnitten gegenüberliegenden Seite in einer Richtung senkrecht zu einer durch die Schwenkachsen gebildeten Ebene, zu erstrecken hat.

Um bei einem kompakten Aufbau des Vorspannelements eine erhöhte Elastizität bereitstellen zu können, kann der Federbügel in einem Federbereich entlang seiner Längserstreckung eine Mehrzahl von Krümmungswechseln aufweisen. Mithin kann der Federbügel im Federbereich eine zweidimensionale Wellenform aufweisen. Durch diese Ausbildung des Federbügels kann zum einen der sich nach hinten erstreckende Bauraum des Federbügels im Vergleich zu einem beispielsweise mit einer Krümmung entsprechend größerem Krümmungsradius verkleinert sein. Zudem verlängert sich entsprechend der Anzahl von Krümmungswechseln eine Gesamtlänge und/oder erhöht sich eine Elastizität beziehungsweise Biegeweichheit des Federbügels.

Wenn die Klammerarme in Gravitationsrichtung oberhalb des Klammerträgers angeordnet sind, und dabei bevorzugt die Klammerarme jeweils eine Abstützfläche zum Abstützen auf dem Klammerträger aufweisen, kann die Gewichtskraft des Behälters zumindest teilweise über die Abstandsflächen auf den Klemmträger übertragen werden. Die Klammerarme können entsprechend weniger massiv ausgebildet werden, insbesondere da dadurch ein auf sie in Gravitationsrichtung wirkendes Biegemoment, welches durch die Gewichtskraft des Behälters und einem Hebelarm zwischen der jeweiligen Schwenkachse und dem jeweiligen Haltebereich hervorgerufen wird, nicht komplett durch den jeweiligen Klammerarm in der Lagerung an der Schwenkachse aufzunehmen ist.

Bevorzugt ist die Abstützfläche jedes Klammerarms dabei zwischen der Position der jeweiligen Schwenkachse und dem jeweiligen Haltebereich vorgesehen. So lassen sich die durch das Halten des Behälters stehenden Biegemomente im Klammerarm besonders gering halten. Alternativ oder zusätzlich kann die Abstützfläche auch auf Höhe des Haltebereichs angeordnet sein, bevorzugt in Bezug auf einen durch die Haltebereiche definierten Mittelpunkt radial außerhalb des Haltebereichs.

Wenn der Federbügel als 3D-Druck-Teil oder Spritzgussteil, bevorzugt aus einem Kunststoff, besonders bevorzugt aus einem technischen Kunststoff oder einem Hochleistungskunststoff, ganz besonders bevorzugt aus PEEK, ausgebildet ist, kann eine einfache und kostengünstige Herstellung und gleichzeitig eine hohe Formfreiheit erreicht werden.

Bevorzugt weisen die einteilig ausgebildeten Klammerarme und das Vorspannelement ein Kunststoffmaterial auf. Dies ermöglicht eine besonders einfache Herstellung mit besonders hoher Formfreiheit hinsichtlich der Ausgestaltung.

Weiter bevorzugt sind die Klammerarme und das Vorspannelement beziehungsweise der Federbügel einteilig als 3D-Druck-Teil oder Spritzgussteil, bevorzugt aus einem Kunststoff, besonders bevorzugt aus einem technischen Kunststoff oder einem Hochleistungskunststoff, ganz besonders bevorzugt aus PEEK, ausgebildet.

Gemäß einer nicht beanspruchten, exemplarischen Ausführungsform sind der erste Klammerarm und der zweite Klammerarm über eine Kupplungsanordnung miteinander schwenkgekoppelt, wobei bevorzugt der erste Klammerarm länger ausgebildet ist als der zweite Klammerarm, wobei bevorzugt die erste Schwenkachse relativ zu einer Aufnahmeseite, auf welcher der Behälter von der Vorrichtung aufgenommen wird, gesehen weiter entfernt angeordnet ist, als die zweite Schwenkachse. Dadurch lässt sich zum einen die Variabilität der Klammervorrichtung erhöhen, da durch diese asymmetrische Ausbildung der Klammervorrichtung die Aufnahme von Behältern verschiedener Größe, insbesondere mit verschieden großen Halsbereichen, ermöglicht ist, ohne dass es zu großen Abweichungen hinsichtlich der Position der Behälterachse bezüglich der Klammervorrichtung für die verschiedenen Behältergrößen kommt. Durch die Schwenkkopplung mag zudem hinsichtlich der Kinematik der beiden Klammerarme genau vorgegeben werden, wie bei einem Einschieben eines Behälters in die Klammervorrichtung sich die Klammerarme zueinander und bezogen auf den Klammerträger verschwenken.

Gemäß einer nicht beanspruchten, exemplarischen Ausführungsform ist die Kupplungsanordnung in Form eines an dem ersten Klammerarm angeordneten Zapfenelements und eines mit dem Zapfenelement in Eingriff stehenden, an dem zweiten Klammerarm angeordneten Taschenelements ausgebildet, wobei bevorzugt das Zapfenelement zumindest an einer Kontaktzone mit dem Taschenelement ein weicheres Material als das Taschenelement aufweist, wobei bevorzugt das Zapfenelement einen Kunststoff, bevorzugt Polyethylenterephthalat (PET), Polyoxymethylen (POM) oder ein Polyetherketon (PEK), bevorzugt PEEK, PAEK, PEKK, PEEEK, PEEKK oder PEKEKK, aufweist, und/oder das Taschenelement eine Stahllegierung, bevorzugt einen nichtrostenden Stahl, besonders bevorzugt eine Edelstahllegierung aufweist. Bevorzugt ist die Kupplungsanordnung derart ausgebildet, dass stets eine Materialkombination aus einem weicheren Material auf einer Seite und einem härteren Material auf der anderen Seite der Kupplungsanordnung vorgesehen ist. Mit anderen Worten weist die Kupplungsanordnung bevorzugt eine Materialpaarung aus einem ersten Material und einem zweiten Material auf, wobei das erste Material eine geringere Härte aufweist als das zweite Material.

Um in der nicht beanspruchten, exemplarischen Ausführungsform einen einfachen Aufbau der Klammervorrichtung und eine kostengünstige Fertigung zu erzielen, kann das Zapfenelement einstückig mit dem Federbügel an einem ersten Ende des Federbügels ausgebildet sein und mit dem auf der lateralen Seite dieses Endes angeordneten Klammerarm rotationsgekoppelt sein. Alternativ oder zusätzlich kann das Taschenelement einstückig mit dem Federbügel an einem zweiten Ende des Federbügels ausgebildet sein und mit dem auf der lateralen Seite dieses Endes angeordneten Klammerarm rotationsgekoppelt sein.

Unter dem Begriff "rotationsgekoppelt" wird vorliegend verstanden, dass in einer Rotationsrichtung, vorliegend einer Rotation um eine Schwenkachse, ein Drehmoment übertragen werden kann. Die Rotationskoppelung kann bevorzugt in Form eines formschlüssigen Eingriffs zwischen den zwei zu koppelnden Komponenten, beispielsweise einer Nut- und Federverbindung, einer Passfeder, einer Verzahnung, oder eines unrunden Querschnittprofils der Verbindungsflächen der beiden zu koppelnden Komponenten, bevorzugt ein Polygonprofil, bereitgestellt sein.

Um die Teilezahl der passiven Klammervorrichtung in der nicht beanspruchten, exemplarischen Ausführungsform besonders gering zu halten, kann der Federbügel an seinen Enden Lagerbuchsen zum Lagern eines Klammerarms um seine Schwenkachse aufweisen.

Gemäß einer weiteren nicht beanspruchten, exemplarischen Ausführungsform ist das Zapfenelement einstückig mit der bezogen auf die Klammermittelachse ersten lateralen Seite angeordneten Lagerbuchse ausgebildet und mit dem auf dieser lateralen Seite angeordneten Klammerarm rotationsgekoppelt, wobei bevorzugt das Taschenelement einstückig mit dem bezogen auf die Klammermittelachse auf der der ersten lateralen Seite gegenüberliegenden lateralen Seite angeordneten Klammerarm ausgebildet ist, bevorzugt eine Stahllegierung, bevorzugt einen nichtrostenden Stahl, besonders bevorzugt eine Edelstahllegierung aufweisend.

Gemäß einer alternativen nicht beanspruchten, exemplarischen Ausführungsform ist das Taschenelement einstückig mit der bezogen auf die Klammermittelachse zweiten lateralen Seite angeordneten Lagerbuchse ausgebildet und mit dem auf dieser lateralen Seite angeordneten Klammerarm rotationsgekoppelt, wobei bevorzugt das Zapfenelement einstückig mit dem bezogen auf die Klammermittelachse auf der der zweiten lateralen Seite gegenüberliegenden lateralen Seite angeordneten Klammerarm ausgebildet ist, bevorzugt eine Stahllegierung, bevorzugt einen nichtrostenden Stahl, besonders bevorzugt eine Edelstahllegierung aufweisend.

Die oben gestellte Aufgabe wird weiterhin durch eine passive Klammer zum Halten eines Behälters in einer passiven Klammervorrichtung, bevorzugt zum Halten eines Getränkebehälters in einem Halsabschnitt, gelöst, umfassend einen um eine erste Schwenkachse schwenkbaren ersten Klammerarm mit einem Halteabschnitt zur Anlage an den zu haltenden Behälter, einen um eine zweite Schwenkachse schwenkbaren zweiten Klammerarm mit einem Halteabschnitt zur Anlage an den zu haltenden Behälter, und ein einstückig mit den Klammerarmen ausgebildeter elastischer Federbügel zum Vorspannen der Klammerarme in eine geschlossene Position, wobei sich der elastische Federbügel in einer senkrecht zu den Schwenkachsen liegenden Ebene erstreckt.

Die hinsichtlich der passiven Klammervorrichtung beschriebenen Vorteile und Wirkungen können analog durch die passive Klammer erzielt werden.

Die passive Klammer kann eine oder mehrere der hinsichtlich der passiven Klammervorrichtung beschriebenen bevorzugten Ausführungen und Ausgestaltungen der Klammerarme und des Vorspannelements beziehungsweise des Federbügels gemäß weiterer bevorzugter Ausführungsformen aufweisen. Das heißt, alle zu den vorgenannten Teilen in Bezug auf die Klammervorrichtung genannten Merkmale treffen auch für die Passive Klammer zu.

In einer nicht beanspruchten, exemplarischen Ausbildung kann ein Federbügel zum Lagern und Vorspannen zweier Klammerarme einer passiven Klammervorrichtung vorgesehen sein, umfassend einen sich zwischen einer ersten Lagerbuchse zum Lagern eines ersten Klammerarms um seine Schwenkachse und einer zweiten Lagerbuchse zum Lagern eines zweiten Klammerarms um seine Schwenkachse erstreckenden Federbereich, wobei sich der Federbereich in einer senkrecht zu den Schwenkachsen liegenden Ebene erstreckt.

Die hinsichtlich der passiven Klammervorrichtung beschriebenen Vorteile und Wirkungen können analog durch den nicht beanspruchten, exemplarischen Federbügel erzielt werden.

Der nicht beanspruchte, exemplarische Federbügel kann eine oder mehrere der hinsichtlich der passiven Klammervorrichtung beschriebenen bevorzugten Ausführungen und Ausgestaltungen des Vorspannelements beziehungsweise des Federbügels gemäß weiterer bevorzugter Ausführungsformen aufweisen. Das heißt, alle zu den vorgenannten Teilen in Bezug auf die Klammervorrichtung genannten Merkmale treffen auch für den Federbügel zu.

Gemäß einer nicht beanspruchten, exemplarischen Ausführungsform ist ein Zapfenelement einstückig mit der ersten Lagerbuchse ausgebildet, wobei das Zapfenelement einen Kopplungsbereich zum Rotationskoppeln mit einem Klammerarm aufweist, und/oder ist ein Taschenelement einstückig mit der zweiten Lagerbuchse ausgebildet, wobei das Taschenelement einen Kopplungsbereich zum Rotationskoppeln mit einem Klammerarm aufweist.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine perspektivische Seitenansicht einer nicht beanspruchten, exemplarischen passiven Klammervorrichtung zum Halten eines Behälters;
- Figur 2: schematisch eine Draufsicht der nicht beanspruchten, exemplarischen passiven Klammervorrichtung aus Figur 1;
- Figur 3: schematisch eine perspektivische Seitenansicht eines Vorspannelements in Form eines Federbügels der nicht beanspruchten, exemplarischen passiven Klammervorrichtung gemäß Figur 1; und
- Figur 4: schematisch eine perspektivische Draufsicht einer passiven Klammervorrichtung zum Halten eines Behälters gemäß einer Ausführungsform.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

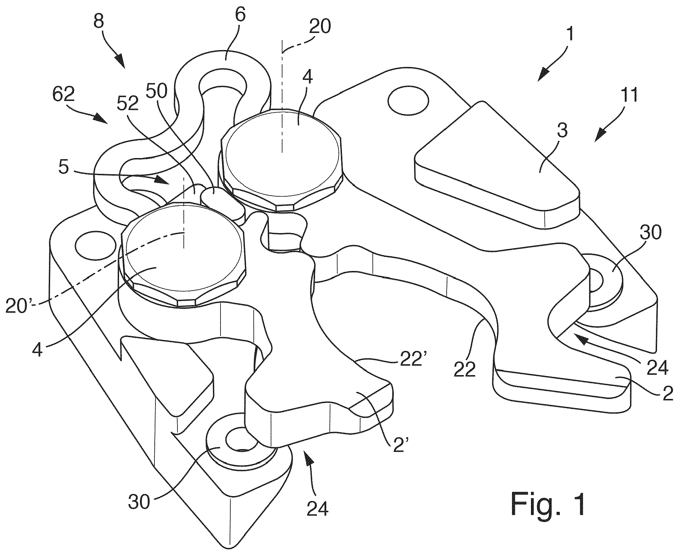

In Figur 1 ist schematisch eine perspektivische Seitenansicht einer nicht beanspruchten, exemplarischen passiven Klammervorrichtung 1 zum Halten eines Behälters gezeigt. Die passive Klammervorrichtung 1 ist vorliegend zum Halten eines Getränkebehälters an seinem Halsabschnitt ausgebildet. Sie umfasst einen um eine erste Schwenkachse 20 an einem Klammerträger 3 schwenkbar angeordneten ersten Klammerarm 2 mit einem Halteabschnitt 22 zur Anlage an den zu haltenden Behälter, einen um eine zweite Schwenkachse 20' am Klammerträger 3 schwenkbar angeordneten zweiten Klammerarm 2' mit einem Halteabschnitt 22 zur Anlage an den zu haltenden Behälter, und ein Vorspannelement zum Vorspannen der Klammerarme 2, 2' in eine geschlossene Position, wobei die Klammerarme 2, 2' dazu eingerichtet und ausgebildet sind, zum Aufnehmen eines Behälters passiv durch ein Einschieben des Behälters geöffnet zu werden. Das Vorspannelement ist ein sich in einer senkrecht zu den Schwenkachsen 20, 20' liegenden Ebene erstreckender elastischer Federbügel 6.

Der Federbügel 6 ist bezüglich der Schwenkachsen 20, 20' auf einer den Halteabschnitten 22, 22' entgegengesetzten Seite 8 der der Klammerarme 2, 2' angeordnet. Er weist in einem Federbereich 62 entlang seiner Längserstreckung eine Mehrzahl von Krümmungswechseln auf.

Vorliegend ist die Klammervorrichtung 1 asymmetrisch ausgebildet. Der erste Klammerarm 2 ist mithin länger ausgebildet als der zweite Klammerarm 2', wobei die erste Schwenkachse 20' relativ zu einer Aufnahmeseite 7, auf welcher der Behälter von der Klammervorrichtung 1 aufgenommen wird, gesehen weiter entfernt angeordnet ist, als die zweite Schwenkachse 20'.

Die Klammerarme 2, 2' sind jeweils mittels eines Bolzens 4 an den Klammerträger 3 angebracht.

Der erste Klammerarm 2 und der zweite Klammerarm 2' sind mittels einer Kupplungsanordnung 5 miteinander schwenkgekoppelt, so dass der zweite Klammerarm 2' bei einer Bewegung des ersten Klammerarms 2 eine entsprechende Bewegung erfährt und umgekehrt. Mit anderen Worten ist durch die Kupplungsanordnung 5 eine Position des ersten Klammerarms 2 relativ zu einer Position des zweiten Klammerarms 2' vorgegeben. Vorliegend sind der erste und der zweite Klammerarm 2, 2' derart miteinander gekuppelt, dass eine Bewegung eines Klammerarms 2, 2' eine entsprechende Gegenbewegung des anderen Klammerarms 2', 2 erzeugt.

Die Klammerarme 2, 2' sind durch den Federbügel 6 in eine geschlossene Position vorgespannt, so dass sich die Klammervorrichtung 1 stets in der geschlossenen Position befindet. Die Klammerarme 2, 2' sind dabei lediglich passiv zu öffnen. Mithin ist an der Klammervorrichtung 1 keine Anordnung zum aktiven Öffnen der Klammerarme 2, 2' vorgesehen. Das Öffnen der Klammerarme 2, 2' erfolgt passiv, das heißt durch ein Einschieben oder Eintauchen des Behälters in die Klammervorrichtung 1, wobei die Behälterwand die Klammerarme 2, 2' beim Einschieben oder Eintauchen auseinanderdrückt. Eine andere, aktive, Öffnung durch die Klammervorrichtung 1 selbst, bei welcher der Behälter nicht mit den Klammerarmen 2, 2' interagiert, ist nicht vorgesehen.

Die Kupplungsanordnung 5 liegt vorliegend im Wesentlichen zwischen der ersten Schwenkachse 20 und der zweiten Schwenkachse 20'und ist vorliegend in Form eines an dem ersten Klammerarm 2 angeordneten Zapfenelements 50 und eines mit dem Zapfenelement 50 in Eingriff stehenden, an dem zweiten Klammerarm 2' angeordneten Taschenelements 52 ausgebildet, wobei das Zapfenelement 50 ein weicheres Material als das Taschenelement 52 aufweist.

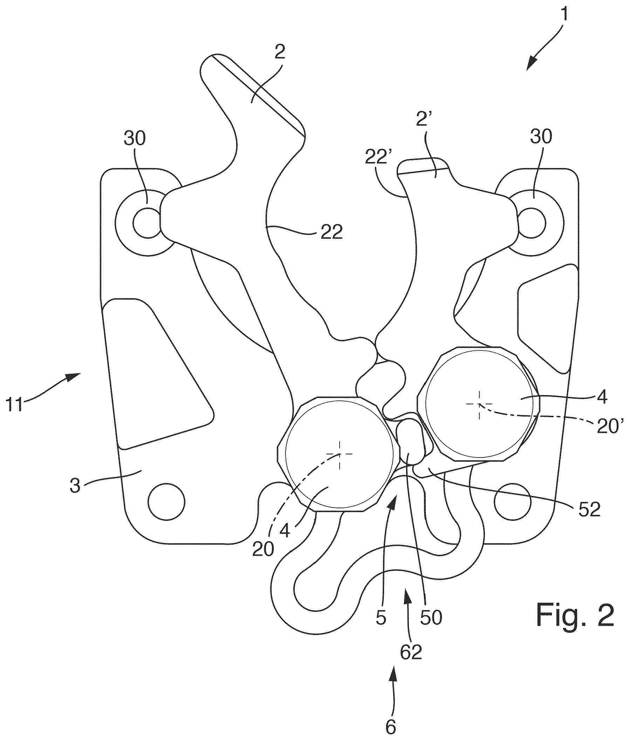

Figur 2 zeigt schematisch eine Draufsicht der nicht beanspruchten, exemplarischen passiven Klammervorrichtung 1 aus Figur 1.

Das Taschenelement 52 ist einstückig mit dem zweiten Klammerarm 2' ausgebildet und weist eine Stahllegierung auf. Das Zapfenelement 50 ist einstückig mit dem Federbügel 6 an einem ersten Ende des Federbügels 6 ausgebildet und mit dem auf der lateralen Seite 11 dieses Endes angeordneten ersten Klammerarm 2 rotationsgekoppelt.

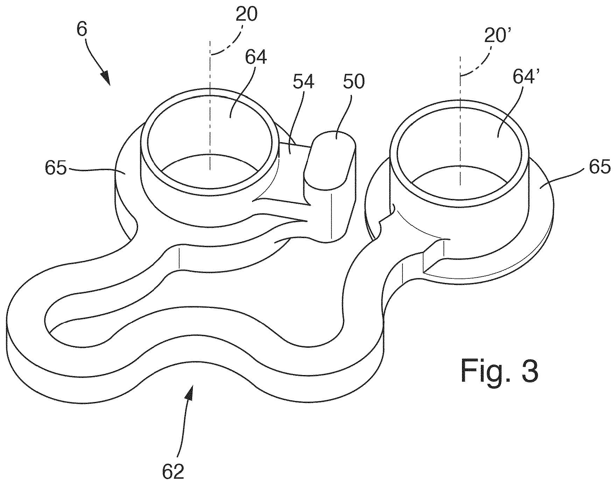

Figur 3 zeigt schematisch eine perspektivische Seitenansicht des Vorspannelements in Form des Federbügels 6 der nicht beanspruchten, exemplarischen passiven Klammervorrichtung 1 aus Figur 1.

Der Federbügel 6 weist an seinen Enden Lagerbuchsen 64 zum Lagern eines Klammerarms 2, 2' um seine Schwenkachse 20, 20' auf. Die Klammerarme 2, 2' werden hierzu bei einem Zusammenbau von oben auf die Lagerbuchsen 64 geschoben, bis sie auf einen Absatz 65 der jeweiligen Lagerbuchse 64 treffen.

Um eine Rotationskoppelung zwischen dem Klammerarm 2 und dem Zapfenelement 50 bereitzustellen, weist das Zapfenelement 50 einen passfederartig ausgebildeten Kopplungs-Bereich 54 auf, mit welchem es einen Formschluss mit einem entsprechend ausgebildeten Nut-Bereich im ersten Klammerarm 2 eingeht, sodass um die Schwenkachse 20 zwischen dem Zapfenelement 50 und dem Klammerarm 2 ein Drehmoment übertragbar ist.

Vorliegend ist der Federbügel 6 als Spritzgussteil aus einem Kunststoff, vorliegend optional PEEK, ausgebildet.

Der Klammerträger 3 sowie die Klammerarme 2, 2' sind aus einer Stahllegierung ausgebildet. Dadurch ist zwischen den Lagerbuchsen 64 und den Klammerarmen 2, 2', sowie zwischen den Absätzen 65 und dem Klammerträger 3 jeweils eine hart/weich-Materialpaarung bereitgestellt. Der Federbügel 6 weist mithin ein Material geringerer Härte auf als der Klammerträger 3 sowie die Klammerarme 2, 2'. Entsprechend ist der Federbügel 6 als Verschleißteil vorgesehen.

Der Federbügel 6 zum Lagern und Vorspannen der Klammerarme 2, 2' der passiven Klammervorrichtung 1 umfasst mithin einen sich zwischen einer ersten Lagerbuchse 64 zum Lagern eines ersten Klammerarms 2 um seine Schwenkachse 20 und einer zweiten Lagerbuchse 64' zum Lagern eines zweiten Klammerarms 2' um seine Schwenkachse 20' erstreckenden Federbereich 62, wobei sich der Federbereich 62 in einer senkrecht zu den Schwenkachsen 20, 20' liegenden Ebene erstreckt.

Wie den Figuren 1 und 2 zu entnehmen, sind die Klammerarme 2, 2' in Gravitationsrichtung gesehen oberhalb des Klammerträgers 3 angeordnet. Die Klammerarme 2, 2' weisen an ihrer Unterseite jeweils eine Abstützfläche 24 zum Abstützen auf dem Klammerträger 3 auf. Hierzu weist der Klammerträger 3 unterhalb der Abstützfläche 24 angeordnete Stützelemente 30 aus einem Kunststoffmaterial auf.

Eine durch einen in der Klammervorrichtung 1 gehaltenen Behälter auf die Haltearme 2, 2' übertragene Gewichtskraft des Behälters kann somit zumindest teilweise bereits über die Abstützflächen 24 in die Stützelemente 30 und somit in den Klammerträger 3 übertragen werden.

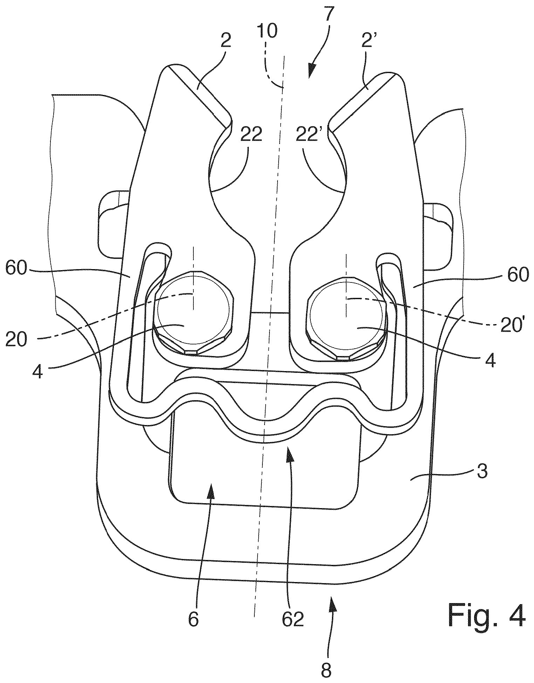

In Figur 4 ist schematisch eine perspektivische Draufsicht einer passiven Klammervorrichtung 1 zum Halten eines Behälters gemäß einer Ausführungsform gezeigt. Bei dieser Klammervorrichtung 1 sind die Klammerarme 2 und das Vorspannelement in Form des Federbügels 6 einstückig ausgebildet als einteiliges Spritzgussteil aus einem Kunststoff.

Die Klammervorrichtung 1 gemäß Figur 4 weist mithin eine passive Klammer 13 zum Halten eines Behälters in einer passiven Klammervorrichtung 1 auf, welche hier zum Halten eines Getränkebehälters in einem Halsabschnitt ausgebildet ist. Die passive Klammer 13 umfasst mithin einen um eine erste Schwenkachse 20 an schwenkbaren ersten Klammerarm 2 mit einem Halteabschnitt 20 zur Anlage an den zu haltenden Behälter, einen um eine zweite Schwenkachse 20' schwenkbaren zweiten Klammerarm 2' mit einem Halteabschnitt 22' zur Anlage an den zu haltenden Behälter, und ein einstückig mit den Klammerarmen 2, 2' ausgebildetes Vorspannelement, wobei das Vorspannelement ein sich in einer senkrecht zu den Schwenkachsen 20, 20' liegenden Ebene erstreckender elastischer Federbügel 6 ist.

Der Federbügel 6 weist an seinen Enden Anbindungsbereiche 60 zum Anbinden an jeweils einen Klammerarm 2, 2' auf, wobei der Federbügel 6 via seiner Anbindungsbereiche 60 bezogen auf die Schwenkachsen 20, 20' an der Seite 7 der Halteabschnitte 22, 22' an den Klammerarmen 2, 2' angreift und sich auf die den Halteabschnitten 22, 22' entgegengesetzte Seite 8 erstreckt.

Die Anbindungsbereiche 60 erstrecken sich dabei bezogen auf eine Klammermittelachse 10 außerhalb der Schwenkachsen 20, 20'.

Der Federbügel 6 weist wiederum eine Mehrzahl von Krümmungswechseln in seinem Federbereich 62 auf.

Der Klammerträger 3 kann vorliegend auch als Träger einer Behälterbehandlungsmaschine ausgebildet sein. Mit anderen Worten können die Klammerarme 2, 2' auch direkt auf einen Träger der Behandlungsmaschine angeordnet werden. Dieser Träger entspricht dann dem Klammerträger 3. Folglich ist es nicht erforderlich, zwingend einen Klammerträger 3 als Extrateil zwischen den Klammerarmen 2, 2' und dem Träger der Behälterbehandlungsmaschine beziehungsweise Behälterbehandlungsvorrichtung vorzusehen.

## Patentansprüche

1. Passive Klammervorrichtung (1) zum Halten eines Behälters in einer Behälterbehandlungsvorrichtung, bevorzugt zum Halten eines Getränkebehälters an einem Halsabschnitt, umfassend einen um eine erste Schwenkachse (20) an einem Klammerträger (3) schwenkbar angeordneten ersten Klammerarm (2) mit einem Halteabschnitt (22) zur Anlage an den zu haltenden Behälter, einen um eine zweite Schwenkachse (20') am Klammerträger (3) schwenkbar angeordneten zweiten Klammerarm (2') mit einem Halteabschnitt zur Anlage an den zu haltenden Behälter, und einen elastischen Federbügel (6) zum Vorspannen der Klammerarme (2, 2') in eine geschlossene Position, wobei die Klammerarme (2, 2') dazu eingerichtet und ausgebildet sind, zum Aufnehmen eines Behälters passiv durch ein Einschieben des Behälters geöffnet zu werden,
**dadurch gekennzeichnet, dass**
sich der elastische Federbügel (6) in einer senkrecht zu den Schwenkachsen (20, 20') liegenden Ebene erstreckt und die Klammerarme (2, 2') und der elastische Federbügel (6) einstückig ausgebildet sind,
der Federbügel (6) an seinen Enden Anbindungsbereiche (60) zum Anbinden an jeweils einen Klammerarm aufweist, und die Anbindungsbereiche (60) bezogen auf die Schwenkachsen (20, 20') an der Seite der Halteabschnitte (22, 22') an den Klammerarmen (2, 2') angreifen und sich auf die den Halteabschnitten (22, 22') entgegengesetzte Seite erstrecken.

2. Passive Klammervorrichtung (1) gemäß Anspruch 1, **dadurch gekennzeichnet, dass** der Federbügel (6) bezüglich der Schwenkachsen (20, 20') auf einer den Halteabschnitten (22, 22') entgegengesetzten Seite der der Klammerarme (2, 2') angeordnet ist.

3. Passive Klammervorrichtung (1) gemäß Anspruch 1 oder 2, **dadurch gekennzeichnet, dass** sich die Anbindungsbereiche (60) bezogen auf eine Klammermittelachse (10) außerhalb der Schwenkachsen (20, 20') erstrecken.

4. Passive Klammervorrichtung (1) gemäß einem der vorstehenden Ansprüche, **dadurch gekennzeichnet, dass** das der Federbügel (6) in einem Federbereich (62) entlang seiner Längserstreckung eine Mehrzahl von Krümmungswechseln aufweist.

5. Passive Klammervorrichtung (1) gemäß einem der vorstehenden Ansprüche, **dadurch gekennzeichnet, dass** die Klammerarme (2, 2') in Gravitationsrichtung oberhalb des Klammerträgers (3) angeordnet sind, wobei bevorzugt die Klammerarme (2, 2') jeweils eine Abstützfläche (24) zum Abstützen auf dem Klammerträger (3) aufweisen, wobei die Abstützfläche (24) jedes Klammerarms (2, 2') bevorzugt zwischen der Position der jeweiligen Schwenkachse (20, 20') und dem jeweiligen Haltebereich (22, 22') vorgesehen ist und/oder auf Höhe des jeweiligen Haltebereichs (22, 22') vorgesehen ist.

6. Passive Klammervorrichtung (1) gemäß einem der vorstehenden Ansprüche, **dadurch gekennzeichnet, dass** der Federbügel (6) als 3D-Druck-Teil oder Spritzgussteil, bevorzugt aus einem Kunststoff, besonders bevorzugt aus einem technischen Kunststoff oder einem Hochleistungskunststoff, ganz besonders bevorzugt aus PEEK, ausgebildet ist.

7. Passive Klammervorrichtung (1) gemäß einem der vorstehenden Ansprüche, **dadurch gekennzeichnet, dass** die Klammerarme (2, 2') und das Vorspannelement ein Kunststoffmaterial aufweisen, wobei die Klammerarme (2, 2') und der Federbügel (6) bevorzugt einteilig als 3D-Druck-Teil oder Spritzgussteil, bevorzugt aus einem Kunststoff, besonders bevorzugt aus einem technischen Kunststoff oder einem Hochleistungskunststoff, ganz besonders bevorzugt aus PEEK, ausgebildet sind.

## Claims

1. Passive clamping device (1) for holding a container in a container treatment device, preferably for holding a beverage container on a neck portion, comprising a first clamping arm (2) which is arranged on a clamp carrier (3) so as to be pivotable about a first pivot axis (20) and has a holding portion (22) for bearing against the container to be held, a second clamping arm (2') which is arranged on the clamp carrier (3) so as to be pivotable about a second pivot axis (20') and has a holding portion for bearing against the container to be held, and an elastic spring clip (6) for pretensioning the clamping arms (2, 2') into a closed position, wherein the clamping arms (2, 2') are configured and designed to be opened passively by pushing in the container in order to receive a container,
**characterized in that**
the elastic spring clip (6) extends in a plane lying perpendicular to the pivot axes (20, 20'), and the clamping arms (2, 2') and the elastic spring clip (6) are formed in one piece,
the spring clip (6) has, at its ends, connecting regions (60) for connecting to in each case one clamping arm, and the connecting regions (60) act on the clamping arms (2, 2') on the side of the holding portions (22, 22') with respect to the pivot axes (20, 20') and extend on the side opposite the holding portions (22, 22').

2. Passive clamping device (1) according to claim 1, **characterized in that** the spring clip (6) is arranged, with respect to the pivot axes (20, 20'), on a side of the clamping arms (2, 2') opposite the holding portions (22, 22').

3. Passive clamping device (1) according to claim 1 or 2, **characterized in that** the connecting regions (60) extend outside the pivot axes (20, 20') with respect to a clamping centre axis (10).

4. Passive clamping device (1) according to one of the preceding claims, **characterized in that** the spring clip (6) has a plurality of changes of curvature in a spring region (62) along its longitudinal extent.

5. Passive clamping device (1) according to one of the preceding claims, **characterized in that** the clamping arms (2, 2') are arranged above the clamp carrier (3) in the direction of gravity, wherein preferably the clamping arms (2, 2') each have a supporting surface (24) for supporting on the clamp carrier (3), wherein the supporting surface (24) of each clamping arm (2, 2') is preferably provided between the position of the respective pivot axis (20, 20') and the respective holding region (22, 22') and/or is provided at the level of the respective holding region (22, 22').

6. Passive clamping device (1) according to one of the preceding claims, **characterized in that** the spring clip (6) is formed as a 3D printed part or injection-moulded part, preferably from a plastic, particularly preferably from a technical plastic or a high-performance plastic, very particularly preferably from PEEK.

7. Passive clamping device (1) according to one of the preceding claims, **characterized in that** the clamping arms (2, 2') and the pretensioning element have a plastic material, wherein the clamping arms (2, 2') and the spring clip (6) are preferably integrally formed as a 3D printed part or injection-moulded part, preferably from a plastic, particularly preferably from a technical plastic or a high-performance plastic, very particularly preferably from PEEK.

## Revendications

1. Dispositif d'agrafage passif (1) pour maintenir un récipient dans un dispositif de traitement de récipient, de préférence pour maintenir un récipient de boisson au niveau d'une portion de col, comprenant un premier bras d'agrafage (2) disposé de manière à pouvoir pivoter autour d'un premier axe de pivotement (20) au niveau d'un support d'agrafe (3) avec une portion de maintien (22) pour l'application contre le récipient à maintenir, un deuxième bras d'agrafage (2') disposé de manière à pouvoir pivoter autour d'un deuxième axe de pivotement (20') au niveau du support d'agrafe (3) avec une portion de maintien pour l'application contre le récipient à maintenir, et un étrier à ressort élastique (6) pour la précontrainte des bras d'agrafage (2, 2') dans une position fermée, dans lequel les bras d'agrafage (2, 2') sont conçus et réalisés pour être ouverts passivement par une insertion du récipient pour la réception d'un récipient,
**caractérisé en ce que**
l'étrier à ressort élastique (6) s'étend dans un plan situé perpendiculairement aux axes de pivotement (20, 20') et les bras d'agrafage (2, 2') et l'étrier à ressort élastique (6) sont formés d'une seule pièce,
l'étrier à ressort (6) présente à ses extrémités des zones de liaison (60) pour la liaison à respectivement un bras d'agrafage, et les zones de liaison (60) par rapport aux axes de pivotement (20, 20') au niveau du côté des portions de maintien (22, 22') viennent en prise avec les bras d'agrafage (2, 2') et s'étendent sur le côté opposé aux portions de maintien (22, 22').

2. Dispositif d'agrafage passif (1) selon la revendication 1, **caractérisé en ce que** l'étrier à ressort (6) est disposé par rapport aux axes de pivotement (20, 20') sur un côté des bras d'agrafage (2, 2') opposé aux portions de maintien (22, 22').

3. Dispositif d'agrafage passif (1) selon la revendication 1 ou 2, **caractérisé en ce que** les zones de liaison (60) par rapport à un axe médian d'agrafe (10) s'étendent à l'extérieur des axes de pivotement (20, 20').

4. Dispositif d'agrafage passif (1) selon l'une quelconque des revendications précédentes,
**caractérisé en ce que** l'étrier à ressort (6) présente dans une zone de ressort (62) le long de son étendue longitudinale une pluralité de changements de courbure.

5. Dispositif d'agrafage passif (1) selon l'une quelconque des revendications précédentes,
**caractérisé en ce que** les bras d'agrafage (2, 2') sont disposés dans la direction de gravitation au-dessus du support d'agrafe (3), dans lequel de préférence les bras d'agrafage (2, 2') présentent respectivement une surface d'appui (24) pour l'appui sur le support d'agrafe (3), dans lequel la surface d'appui (24) de chaque bras d'agrafage (2, 2') est prévue de préférence entre la position de l'axe de pivotement respectif (20, 20') et la zone de maintien respective (22, 22') et/ou est prévue à hauteur de la zone de maintien respective (22, 22').

6. Dispositif d'agrafage passif (1) selon l'une quelconque des revendications précédentes,
**caractérisé en ce que** l'étrier à ressort (6) est réalisé sous forme de pièce d'impression 3D ou de pièce moulée par injection, de préférence en une matière plastique, de manière particulièrement préférée en une matière plastique technique ou en une matière plastique à haute performance, de manière tout particulièrement préférée en PEEK.

7. Dispositif d'agrafage passif (1) selon l'une quelconque des revendications précédentes,
**caractérisé en ce que** les bras d'agrafage (2, 2') et l'élément de précontrainte présentent une matière plastique, dans lequel les bras d'agrafage (2, 2') et l'étrier à ressort (6) sont réalisés de préférence d'une seule pièce sous forme de pièce d'impression 3D ou de pièce moulée par injection, de préférence en une matière plastique, de manière particulièrement préférée en une matière plastique technique ou en une matière plastique à haute performance, de manière tout particulièrement préférée en PEEK.
